# EUROPEAN PATENT APPLICATION

(11) **EP 4 201 690 A1**
(43) Date of publication of application: **28.06.2023**
(21) Application number: 21306888.5
(22) Date of filing: 21.12.2021
(51) Int. Cl.: B43K 8/24, B43K 24/03, B43K 24/08, G06F 3/0354

(54) **WRITING INSTRUMENTS**

(71) Applicant: BIC Violex Single Member S.A., 14569 Anoixi (GR)
(72) Inventor: KATSIKAS, Georgios, 14569 Anoixi (GR)
(74) Representative: Cabinet Beau de Loménie

(57) **Abstract**

The present disclosure relates to a writing instrument (10) comprising:
-a barrel (12) having a longitudinal axis (X),
-a writing tip (22),
-a writing tip extension-retraction system (20) configured to slide axially inside the barrel (12) between a first extended forward position wherein the writing tip extends outside the barrel (12) and a second retracted rearward position wherein the writing tip is retracted inside the barrel (12) from the first extended forward position along an axial rearward direction,
-a locking system (34) moveable between a locked position wherein the locking system is engaged with the writing tip extension retraction system 20 in the first extended forward position to lock the latter in this position and an unlocked position wherein the locking system (34) is disengaged from the writing tip extension-retraction system.

## Description

### Technical Field

The present disclosure relates to the field of writing devices. More specifically, the present disclosure relates to writing devices with a writing tip that can be extended and retracted.

### Background

Writing instruments comprising a barrel and a writing tip that can be extended outside the barrel for writing purpose when a user actuates a writing tip extension-retraction system inside the barrel and retracted inside the barrel when the user no longer needs to use the writing instrument are largely known.

Further, prior art systems which automatically retract the writing tip of a writing instrument inside the barrel are also known, such as systems described in patent documents US 10,532,601 B2, US 2004/228671 A1 and US 8,100,598 B2.

However, these systems need actuation by the user which may forget to retract back the writing tip after using the writing instrument, thereby e.g. drying writing tip for those writing implements using ink or keeping the writing tip more vulnerable e.g. if the writing implement falls down.

The present disclosure aims to address one or more problems in the prior art.

### Summary

In a first aspect, the present disclosure relates to a writing instrument. The writing instrument comprises a barrel having a longitudinal axis, a writing tip, and a writing tip extension-retraction system configured to slide axially inside the barrel between a first extended forward position wherein the writing tip extends outside the barrel and a second retracted rearward position wherein the writing tip is retracted inside the barrel from the first extended forward position along an axial rearward direction. The writing instrument further comprises a locking system moveable between a locked position wherein the locking system is engaged with the writing tip extension-retraction system in the first extended forward position to lock the latter in this position and an unlocked position wherein the locking system is disengaged from the writing tip extension-retraction system.

The locking system comprises a first moveable part configured to engage with the writing tip extension-retraction system to maintain the writing tip extension-retraction system in the first extended position when the writing instrument is in a writing orientation, and a trigger configured to restrict movement of the first moveable part when the trigger is in a first locked position and to allow movement of the first moveable part when the trigger is in a second unlocked position, wherein the trigger is configured to switch from the first locked position to the second unlocked position when the writing tip extension-retraction system is in the first ended forward position and the writing instrument is moved from a writing orientation to a rest orientation.

According to the first aspect, the writing tip extension-retraction system may be easily and reliably caused to move to a second retracted rearward position by merely moving (through a user) the writing instrument to a horizontal orientation or an orientation with the writing tip oriented upwardly without carrying out any other action such as exerting an effort on an actuation member, e.g. pulling, pressing, etc. A horizontal orientation or an orientation with the writing tip oriented upwardly or facing up may be considered as a rest orientation; i.e. an orientation in which the writing instrument is no longer configured for writing purpose. In the present disclosure, the horizontal orientation or upward orientation is defined relative to the floor or ground or a lying surface or support, e.g. a table, on which the writing instrument can be laid down in a rest orientation. The upward orientation of the writing tip more particularly defines an orientation that is opposed to the floor/ground (or a lying surface or support) where the writing tip faces up with respect to the floor/ground. The writing tip of the writing instrument would, in contrast, be oriented downwardly if it were facing the floor/ground or a lying surface or support. In the present disclosure the retraction movement may be automatically achieved through reorienting the writing instrument as described above, in particular through lifting the writing tip upwardly. More particularly, the natural movement of the user after writing is to lift the writing tip from the writing surface and orienting the writing instrument either horizontally or even with the writing tip facing up. The gesture of the user may cause a weight member to move relative to the writing instrument and, notably the locking system thereof, thereby causing unlocking of the latter thanks to the rotation of the weight.

In embodiments, the writing tip extension-retraction system may further comprise a locking groove on an outer surface of the writing tip extension-retraction system, wherein the locking groove may be configured to capture the moveable part when the writing tip extension-retraction system is in the first extended forward position.

In embodiments, the trigger may comprise a second moveable part configured to be engaged with the first moveable part, and a third moveable part configured to be subjected to forwardly oriented pressure forces.

In embodiments, the second moveable part may comprise a locking face and an unlocking face, wherein the locking face may be configured to restrict movement of the first moveable part, and the unlocking face may be configured to allow movement of the first moveable part out of the locking position.

In embodiments, the third moveable part may be configured to be moved in the axial rearward direction when the writing instrument is moved from a writing orientation to a rest orientation.

In embodiments, the trigger may further comprise a pin axis, wherein the second moveable part and the third moveable part may be connected across the pin axis such that the third moveable part is configured to exert a torque force on the second moveable part when the third moveable part is rotated about the pin axis.

In embodiments, the trigger may be configured to, when switching from the first locked position to the second unlocked position, transfer between a locking face being engaged and an unlocking face being engaged.

In embodiments, the third moveable part may be configured to exert a torque on the second moveable part that initiates the trigger to switch from the first locked position to the second unlocked position when the writing instrument is moved from a writing orientation toward a rest orientation.

In embodiments, the trigger may be configured to, when switching from the first locked position to the second unlocked position, cause the unlocking face to engage the first moveable part to move out from the locking groove, and the writing tip extension-retraction system to move rearwardly to the second retracted rearward position.

In embodiments, the second moveable part and the third moveable part may be cohesively connected in a unibody construction.

In embodiments, the third moveable part may be a ring that axially encircles the writing tip extension-retraction system.

In embodiments, the first moveable part may be a sphere. In examples, a metallic sphere.

In embodiments, the writing instrument may comprise a biasing member configured to bias the writing tip extension retraction system in the axial rearward direction.

In embodiments, the biasing member may be a spring.

In embodiments, the biasing member may be configured to exert a force that pushes the first moveable part out of the locking groove when the trigger is in the unlocking position.

### Brief Description of the Drawings

Figure 1 show an exemplary embodiment of a writing instrument of the present disclosure.
Figure 2 shows a half section view of an exemplary embodiment of a writing instrument of the present disclosure.
Figure 3 shows an enlarged view of an exemplary embodiment of a writing instrument of the present disclosure.
Figure 4 shows another enlarged view of an exemplary embodiment of a writing instrument of the present disclosure.
Figure 5A-C shows various configurations of an exemplary locking system of the present disclosure.
Figure 6 shows an exemplary embodiment of a writing instrument of the present disclosure in retracted position.

### Detailed Description

Hereinafter, a detailed description will be given of the present disclosure. The terms or words used in the description and the aspects of the present disclosure are not to be construed limiting as only having common-language or dictionary meanings and should, unless specifically defined otherwise in the following description, be interpreted as having their ordinary technical meaning as established in the relevant technical field. The detailed description will refer to specific embodiments to better illustrate the present disclosure, however, it should be understood that the presented disclosure is not limited to these specific embodiments.

In the present disclosure the term "gravity" naturally refers to the newtonian gravitational acceleration created by the earth and the term "gravity direction" refers to the direction of the acceleration which is oriented downwardly with respect to the location where the writing instrument is located.

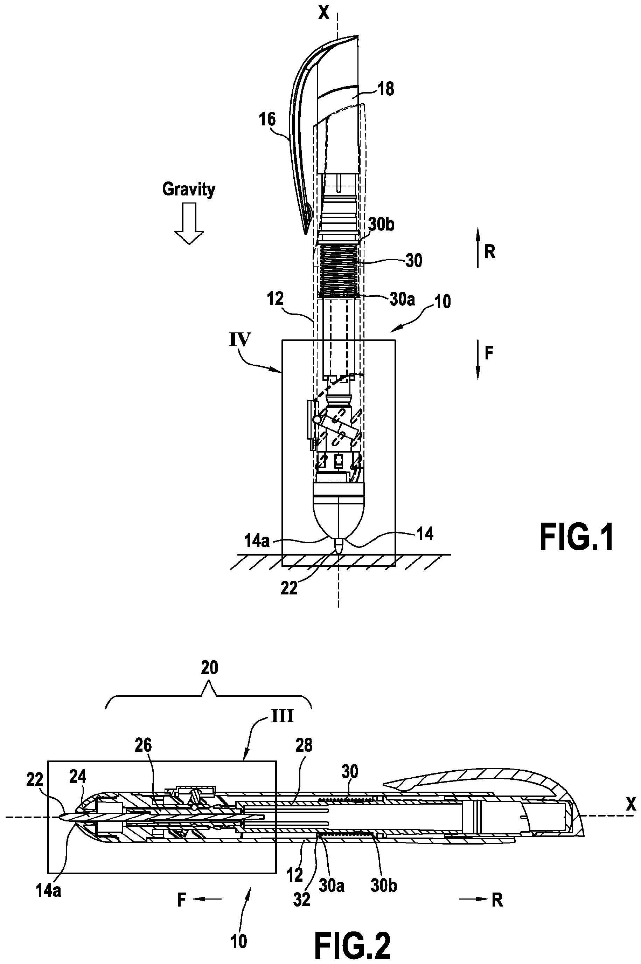

In a first exemplary embodiment, the present disclosure relates to a writing instrument as shown in figures 1 and 2 of which the description follows. Figure 1 a schematic partial view of a writing instrument oriented in a writing orientation, i.e. oriented substantially perpendicularly or obliquely relative to the ground with a writing tip 7 oriented downward. This orientation may be similar to how a writing instrument is oriented when handled by a user for writing purpose. Certain features of the writing instrument are rendered invisible for ease of view in figure 1. Figure 2 is a cut away full section view of the writing instrument. The following description will be made with reference to figures 1 and 2 simultaneously as some details of the writing instrument do not appear on all the figures.

The writing instrument may be a marker, a felt pen, a highlighter, a ball point pen, a permanent or non-permanent marker or any other type of writing instrument or stylus with an extension and retraction mechanism for extending and retracting a writing tip 22 of the instrument when necessary. The writing tip 22 may, for example, convey ink to a writing surface when the writing instrument is ink-based. Alternatively, or additionally, the writing tip 22 may be a contact point when the writing instrument is a stylus, such as, for instance, a stylus that may be used to interact with an electronic writing surface.

The writing instrument 10 may comprise a barrel or tubular body 12 having a longitudinal axis X. The tubular body 12 may be a unitary body, or may comprise multiple components. In Figure 1, a portion of the length of the barrel has been withdrawn to show the internal mechanism involved in the present disclosure.

The writing instrument 10 may comprise at a first forward end of the instrument a tip component 14 comprising a writing orifice 14a which is located at the distal end of the tip component 14. The writing instrument 10 may comprise, at a second opposed rearward end of the writing instrument, a clip 16 for clipping the instrument onto a support, a piece of clothes etc. The clip 16 may be actuated by a user, e.g. by pressing the latter with a finger (e.g. the thumb) forwardly along the axis X so as to cause extension of the writing tip of the instrument through the writing orifice 14a in a known manner. To be noted that other actuating members may alternatively be used for causing writing tip extension. The writing instrument 10 may further comprise in the tubular body a tank (not shown in Figure 1) for storing a writing ink used by the writing tip. The writing instrument 10 may further comprise a filler cap 18 disposed between the barrel 12 and the clip 16 (figs. 1 and 2). The clip 16 may be firmly engaged around the protruding end of the filler cap 18 so as to cover the latter as shown in figures 1 and 2. The barrel 12 may extend longitudinally from the tip component 14 toward the rear part of the instrument where the clip 16 is located. As shown in fig. 1, the barrel 12 may extend longitudinally in a rearward direction so as to cover as a sheath the internal components of the writing instrument, including a forward end of the filler cap 18 while leaving the clip 16 uncovered.

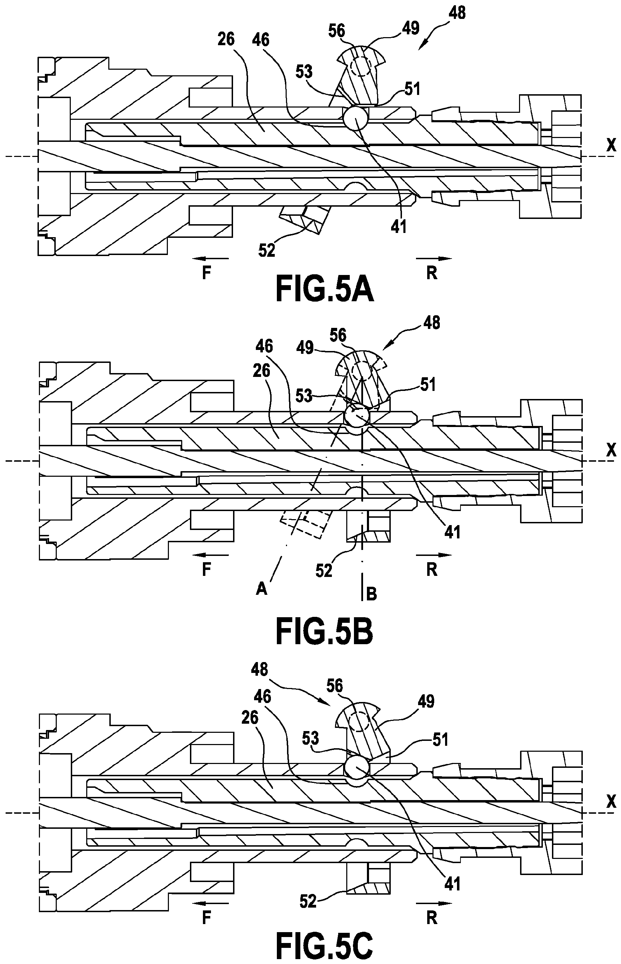

Turning to fig. 2, the writing instrument 10 may comprise, within the barrel 12, a writing tip extension-retraction system or mechanism 20 that is configured to slide axially (along axis X) inside the barrel between a first extended forward position wherein a writing tip 22 extends outside the distal writing orifice 14a (figs 1 and 2), and a second retracted rearward position shown in fig. 5, in which the writing tip 22 has been retracted inside the barrel 12 along an axial rearward direction (arrow R on figure 2) from the first extended forward position of figures 1 and 2.

The writing tip extension-retraction system 20 may further comprise other internal components such as a nib 24 of which a first end forms the writing tip 22 and a nib holder 26 (e. g. a sleeve surrounding the nib) which may at least partly surround the nib 24 and firmly maintain the latter inside the nib holder 26. The nib 24 is fixed inside the nib holder 26 and the latter is fixed to an inner tube 28 that may contain the ink tank, e.g. through tight engagement or insertion of the second opposed end of the nib 24 into an opened first end of the inner tube 28. The inner tube 28 extends rearwardly and is configured to move in accordance with the writing tip extension-retraction system 20 between a position that is located proximate the rear end of the barrel 12, in the first forward extended position, and a position located beyond the rear end of the barrel 12 in the second rearward retracted position. The filler cap 18 may be tightly mounted inside a second opposed end of the inner tube 28, e.g. by press-fit, so as to ensure air tight and prevent ink from evaporating. To be noted that the clip can be used as a filler cap: thus, instead of having a filler cap and a clip, one piece may serve for both elements.

The writing instrument 10 may further comprise a biasing member 30, e.g. a spring, that is longitudinally disposed in the writing instrument and has two opposite ends along its longitudinal dimension: one end, 30a, may rest against at least one fixed stop 32 that is arranged on an inner surface of the barrel 12 (fig. 2), e.g. under the form of a peripheral inner ridge, and the opposite end 30b of biasing member 30 may press against a rear part of the inner tube 28, here on an outside shoulder thereof. Thus the biasing member 30 is positioned between a fixed part of the barrel and the inner tube 28 so as to exert permanent rearward pulling forces on the latter, in rearward direction R, which tend to pull rearwardly the inner tube 28, and therefore the writing tip extension-retraction system 20 toward the second retracted position of figure 5C.

The writing instrument 10 may further comprise a locking system 34, aspects of which are visible on both figs. 1 and 2, that is moveable between two positions:

-a first locked position wherein it engages with the writing tip extension retraction system 20 in the first extended forward position of figures 1 and 2 so as to lock the latter in this position and withstand the biasing forces exerted in the axial rearward direction R by the biasing member 30;

-and a second unlocked position wherein it is disengaged from the writing tip extension-retraction system 20, and does therefore no longer counter the biasing forces, thereby enabling rearward sliding of the writing tip extension-retraction system 20, which reaches the second retracted rearward position (see fig 5).

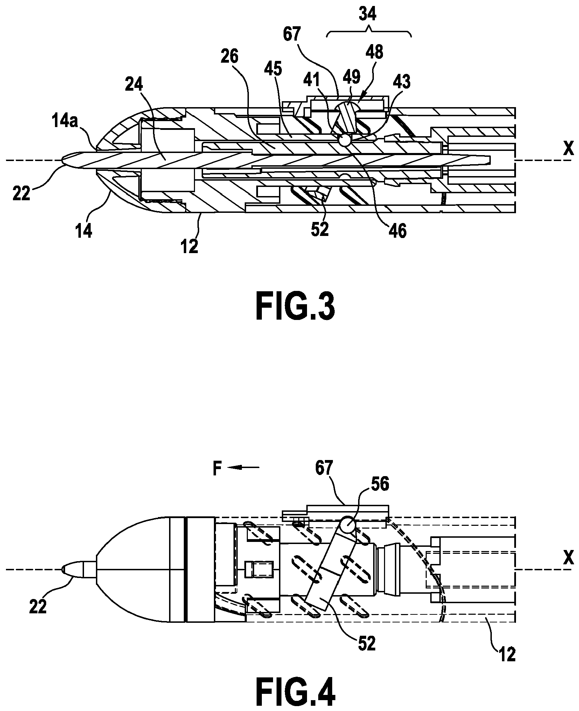

More particularly, as shown in the enlarged drawing of figure 3, the locking system 34 may comprise a first moveable part 41 which may be a rolling element and configured to be engaged with a corresponding portion of the writing tip extension-retraction system 20. In the illustrated example, the rolling element 41 is a sphere, although other geometries or structures may be conceived. The sphere may be metallic. The rolling element 41 may be disposed in a recess 43 of the writing instrument that is external to the writing tip extension retraction system 20 and allows the rolling element 41 to contact a surface or element of the writing tip extension retraction system 20. For example, the recess 43 may be located on a structural member of or that is connected to the barrel 12, such as a housing 45 within the barrel 12, and the recess 43 is configured to allow the rolling element 41 to be in contact with the nib holder 26, or in contact with an element that is connected to the nib holder 26. The corresponding portion of the writing tip extension-retraction system 20 that interacts with the first moveable part 41 may be a groove 46 on the nib holder 26 that is shaped so as to partially "capture" the rolling element 41 when the writing tip extension-retraction system 20 is in the locked position. The other portion of the first moveable part 41 remains accommodated in the fixed recess 43 of the writing instrument.

A second moveable part 49 is configured to restrict movement of the first moveable part 41 when the second moveable part 49 is in a first configuration and to allow movement of the first moveable part 41 when the second moveable part 49 is in a second configuration.

A third moveable part 52 is configured to be subject to forwardly oriented pressure forces which press forwardly, i.e. toward the forward tip component 14 in the direction of arrow F when the writing instrument 10 is in a writing orientation. The third moveable part 52 is connected to the second moveable part 49 so as to transfer to the second moveable part 49 relative changes in the direction of the pressure forces experienced by the third moveable part 52.

The locking system 34 may include a trigger member 48. The trigger member 48 may have a toggle 49 which corresponds to the second moveable part of the locking system 34 and a weight member 52 which corresponds to the above third moveable part.

As shown in figure 4, the toggle 49 is configured to pivot about a pin axis 56 that is perpendicular to the longitudinal axis X of the barrel in the section planes of the figures. The weight member 52 is similarly able to pivot about the pin axis 56. The weight member 52 may be connected to the toggle 49 such that the toggle 49 and weight member 52 may pivot in sync, such that when the weight member 52 rotates in a counter clockwise direction, the toggle 49 also rotates in a counter clockwise direction, and when the toggle 49 rotates in a clockwise direction, the weight member 52 also rotates in a clockwise direction. The toggle and weight member may be connected across the pin axis 56, such that the pin axis 56 forms a nexus between the toggle 49 and the weight member 52. When the weight member 52 is rotated, such as in the rearward direction R, the weight member 52 may exert a torque force on the toggle 49.

In embodiments, the trigger 48 may be formed of a single member such that the weight member 52 portion and toggle 49 portion may be cohesively connected in a unibody construction or form together an integral member. For instance, the weight member 52 and toggle 49 may be cast as a single member from plastic, metal, or a similar material. In this configuration, the weight member 52 portion may be formed so as to have sufficient mass to apply torque to the toggle 49 portion when the weight member 52 is moved in the rearward direction R. The mass of the weight member 52 may be augmented, such as by adding heavy components to the structure of the weight member. The pin may be a separate component, such as a metallic pin, that is assembled with the trigger member 48.

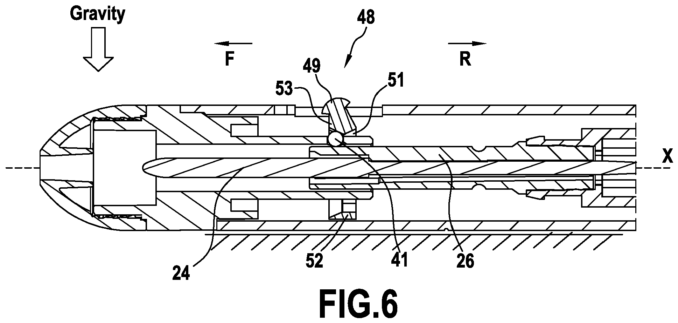

Looking to figure 5A-C, the toggle 49 may have at least two faces that are angled from each other, including a first face 51 , or locking face, and a second face 53, or unlocking face. The toggle 49 may be configured such that at least one face of the toggle 49 is in contact with the first moveable part 41 at any time. The locking face 51 is configured to, when the locking face 51 is "engaged," maintain a locking position of the first moveable part 41 with respect to the locking groove 46, wherein the locking position is a position where the first moveable part 41 maintains the writing tip extension retraction system 20 in the first locked position, as shown in figure 5A. The unlocking face 53 is configured to, when the unlocking face is engaged, allow movement of the first moveable part 41 relative to the locking groove 46 such that the first moveable part 41 may move out of the locking position, which has the effect of moving the writing tip extension retraction system 20 into the second unlocked position, as shown in figure 5C. The first face 51 and the second face 53 may have differing angles and/or diameters relative to the pin axis 56 to create different recess sizes for the first moveable part 41. For instance, the portion of the toggle between the locking face 51 and pin axis 56 may be "longer", i.e., the locking face 51 is further from the pin axis 56, than the portion of the toggle between the unlocking face 53 and the pin axis. When the locking face 51 is in contact with the first moveable part 41, the pocket formed around the recess by the toggle 49 and the nib holder 26 is smaller such that the locking face 51 may press the first moveable part 41 into the locking groove 46. If the nib holder is positioned within the barrel such that the locking groove is adjacent to the recess, then the first moveable part 41 will engage with the locking groove 46 to lock the writing tip-extension-retraction system 20 against axial movement relative to axis X. When the unlocking face 53 is engaged, the pocket may be larger such that the unlocking face 53 may not press the first moveable part 41 into the locking groove 46. Thus, the first moveable part 41 may disengage with the locking groove 46 and move away from the nib holder. In this way, the first moveable part 41 may no longer lock the writing tip extension retraction system 20, and pressure from the biasing member 30 may move the writing tip extension retraction system into the second unlocked position, wherein the nib 24 may retreat into the barrel 12 of the writing instrument 10, as shown in figure 6. Figure 5B demonstrates that the toggle 49 is configured to switch from the first locked position to the second unlocked position, which involves switching between the locking face 51 being engaged with the unlocking face 53 disengaged, and the unlocking face 53 being engaged with the locking face 51 disengaged.

An operation of the locking system is demonstrated, returning to figure 5A. When a user actuates the writing tip extension-retraction system 20 by pressing the cap 18 in the forward direction F, the writing tip extension-retraction system 20 moves in the forward direction F. When the locking groove 46 aligns with the recess 43, the first moveable part 41 moves into the locking groove 46. The first moveable part 41 thus prevents axial movement of the writing tip extension-retraction system 20 in either the forward direction F or the rearward direction R. For instance, the first moveable part 41 interlocks with the locking groove 46 to make it possible for the locking system to withstand the biasing forces exerted by the biasing member 30 in the rearward direction R.

As long as the weight member 52 is submitted to the forwardly-oriented forces (arrow F) stemming from the weight of the weight member 52 (due to gravity attraction which attracts the member downwardly) in the writing orientation (the writing instrument 10 is placed in an inclined writing orientation relative to the floor or the lying surface or support, e.g. a table, on which a user intends to use the instrument), the toggle 49 is kept in a first locked position of figure 5A, which keeps the locking face 51 of the toggle 49 engaged with the first moveable part 41, and maintains the first moveable part 41 in the locking groove 46 of the writing tip extension retraction system 20, thus keeping the writing tip extension retraction system 20 in the locked position (first extended forward position of the writing tip extension-retraction system 20 where the writing tip 22 extends outside the barrel).

When the writing instrument 10 is moved from the writing orientation toward a rest orientation, such as a horizontal orientation that is substantially parallel to the floor (or an orientation not represented on the drawings with the writing tip oriented upwardly, i.e. in a direction away from the floor, or in any such orientation similar to how a writing instrument is oriented when not handled by a user engaged in writing) as shown in figure 6, the weight member 52 is naturally rotated rearwardly due to its weight in a pendulum-like movement, such as from axis A to axis B as shown in figure 5B. The trigger 48 is configured to convert the rearward rotation of the weight member 52 into a switching movement of the toggle 49 by manner of the rearward rotation of the weight member 52 exerting a torque force on the toggle 49, such that the rearward rotation of the weight member forces the toggle to transfer from the locking face 51 being engaged to the unlocking face 53 being engaged. Without the locking face 51 pressing on the first moveable part 41, the force exerted by the biasing member 30 is able to overcome the first moveable part 41 and push the first moveable part 41 from the locking groove 46. Owing to the absence of the first moveable part 41 in the locking groove 46 to oppose movement of the writing tip extension retraction system 20, there are no forces within the writing instrument 10 to oppose the rearwardly-oriented biasing forces exerted by biasing member 30 on the writing tip extension retraction system 20. This causes the system 20 to move rearwardly to the second retracted unlocked position of figure 6 (the locking system is thus caused to move from the locked position to the unlocked position).

The writing tip extension-retraction system 20 is thus automatically released without any specific action from a user (except the change in orientation of the writing instrument from a writing orientation to a rest orientation such as a horizontal orientation or even to an orientation where the writing tip is facing upwardly and the clip 16 downwardly) and can slide rearwardly inside the barrel under the action of biasing member 30, which is no longer compensated for, to occupy the second retracted unlocked position of figure 5C. Therefore the mere change in orientation of the writing instrument 10 as described above makes it possible to automatically unlock the writing tip extension-retraction system 20 and cause the latter to move to a second retracted rearward position wherein the writing tip 22 is retracted inside the barrel (figure 6).

Returning to figure 3, the weight member 52 may axially encircle the nib holder. In this configuration, the weight member 52 may be a ring. The weight member 52 may be connected to the pin axis 56 such that the weight member 52 is configured to be moved in the axial rearward direction (R) when the writing instrument is moved from a writing orientation to a rest orientation, such as a horizontal orientation that is parallel to the floor or ground or to a lying surface (e.g. table etc.). The locking system may further include a cover 67 (fig 4) that acts as a shield to the internal mechanism of the locking mechanism. The cover 67 may be disposed on an external face of the barrel 12.

Although the embodiments of the present disclosure have been disclosed for illustrative purposes, those skilled in the art will appreciate that various modifications and alterations are possible, without departing from the present disclosure. It is also to be understood that such modifications and alterations are incorporated in the scope of the present disclosure and the accompanying claims.

## Claims

1. A writing instrument (10) comprising:
- a barrel (12) having a longitudinal axis (X),
- a writing tip (22),
- a writing tip extension-retraction system (20) configured to slide axially inside the barrel (12) between a first extended forward position wherein the writing tip (22) extends outside the barrel (12) and a second retracted rearward position wherein the writing tip (22) is retracted inside the barrel (12) from the first extended forward position along an axial rearward direction (R),
- a locking system (34) moveable between a locked position wherein the locking system (34) is engaged with the writing tip extension-retraction system (20) in the first extended forward position to lock the latter in this position and an unlocked position wherein the locking system (34) is disengaged from the writing tip extension-retraction system (20),
the locking system (34) comprising
- a first moveable part (41) configured to engage with the writing tip extension-retraction system (20) to maintain the writing tip extension-retraction system (20) in the first extended position when the writing instrument (10) is in a writing orientation, and
- a trigger (48) configured to restrict movement of the first moveable part (41) when the trigger (48) is in a first locked position and to allow movement of the first moveable part (41) when the trigger (48) is in a second unlocked position, wherein the trigger (48) is configured to switch from the first locked position to the second unlocked position when the writing tip extension-retraction system (20) is in the first ended forward position and the writing instrument (10) is moved from a writing orientation to a rest orientation.

2. The writing instrument of claim 1, wherein the writing tip extension-retraction system (20) further comprises a locking groove (46) on an outer surface of the writing tip extension-retraction system (20), wherein the locking groove (46) is configured to capture the moveable part (41) when the writing tip extension-retraction system (20) is in the first extended forward position.

3. The writing instrument of claim 1 or 2, wherein the trigger (48) comprises a second moveable part (49) configured to be engaged with the first moveable part (41), and a third moveable part (52) configured to be subjected to forwardly oriented pressure forces.

4. The writing instrument of claim 3, wherein the second moveable part (49) comprises a locking face (51) and an unlocking face (53), wherein the locking face (51) is configured to restrict movement of the first moveable part (41), and the unlocking face (53) is configured to allow movement of the first moveable part (41) out of the locking position.

5. The writing instrument of claim 3 or 4, wherein the third moveable part (52) is configured to be moved in the axial rearward direction (R) when the writing instrument is moved from a writing orientation to a rest orientation.

6. The writing instrument of any of claims 3 to 5, wherein the trigger (48) further comprises a pin axis (56), wherein the second moveable part (49) and the third moveable part (52) are connected across the pin axis (56) such that the third moveable part (52) is configured to exert a torque force on the second moveable part (49) when the third moveable part (52) is rotated about the pin axis (56).

7. The writing instrument of any of claims 4 to 6, wherein the trigger (48) is configured to, when switching from the first locked position to the second unlocked position, transfer between the locking face (51) being engaged and the unlocking face (53) being engaged.

8. The writing instrument of claim 7, wherein the third moveable part (52) is configured to exert a torque on the second moveable part (49) that initiates the trigger (48) to switch from the first locked position to the second unlocked position when the writing instrument (10) is moved from a writing orientation toward a rest orientation.

9. The writing instrument of claim 8, wherein the trigger (48) is configured to, when switching from the first locked position to the second unlocked position, cause the unlocking face (53) to engage, the first moveable part (41) to move out from the locking groove (46), and the writing tip extension-retraction system (20) to move rearwardly to the second retracted rearward position.

10. The writing instrument of any of claims 3 to 9, wherein the second moveable part (49) and the third moveable part (52) are cohesively connected in a unibody construction.

11. The writing instrument of any of claims 3 to 10, wherein the third moveable part (52) is a ring that axially encircles the writing tip extension-retraction system (20).

12. The writing instrument of any of claims 1 to 11, wherein the first moveable part (41) is a sphere.

13. The writing instrument of any one of the preceding claims, wherein the writing instrument (10) comprises a biasing member (30) configured to bias the writing tip extension-retraction system (20) in the axial rearward direction (R).

14. The writing instrument of claim 14, wherein the biasing member (30) is a spring.

15. The writing instrument of claim 2 and claim 13 or 14, wherein the biasing member (30) is configured to exert a force that pushes the first moveable part (41) out of the locking groove (46) when the trigger (48) is in the unlocking position.
